# EUROPEAN PATENT SPECIFICATION

(11) **EP 4 430 736 B1**
(45) Date of publication and mention of the grant of the patent: **02.04.2025**
(21) Application number: 23768280.2
(22) Date of filing: 08.09.2023
(51) Int. Cl.: H02K 15/02, H02K 15/03, B32B 37/00, B32B 37/12, B32B 37/20

(54) **METHOD OF PRODUCING MULTILAYER MATERIAL PRIOR TO STAMPING PRESS FOR ELECTRIC MOTOR LAMINATED COMPONENTS**
VERFAHREN ZUR HERSTELLUNG VON MEHRSCHICHTMATERIAL VOR EINER STANZPRESSE FÜR LAMINIERTE KOMPONENTEN EINES ELEKTROMOTORS
PROCÉDÉ DE PRODUCTION D'UN MATÉRIAU MULTICOUCHE AVANT LA PRESSE À ESTAMPER POUR COMPOSANTS STRATIFIÉS DE MOTEUR ÉLECTRIQUE

(30) Priority: 08.09.2022 US 202263404629 P
(43) Date of publication of application: 18.09.2024
(73) Proprietor: MAGNA Powertrain GmbH & Co KG, 8502 Lannach (AT)
(72) Inventor: HOFKIRCHNER, Rainer, 4300 St. Valentin (AT); LAI, Christopher, Maple, Ontario L6A 0T6 (CA); MASHAYEKHI, Majid, Richmond Hill, Ontario L4E 3W6 (CA); VUKOJICIC, Dejan, Aurora, Ontario L4G 7W9 (CA); KOTAGIRI, Kishore, Brampton, Ontario L6S 5T2 (CA); DIETRICH, Alexander, 8461 Ehrenhausen (AT); REITERER, Markus, 8200 Gleisdorf (AT); PHILLIPS, Headley, Kleinburg, Ontario L4H 3N5 (CA)
(74) Representative: Zangger, Bernd
(86) International application number: PCT/EP2023/074705
(87) International publication number: WO 2024/052519

(56) References cited:
- DE-A1- 102019 213 658
- JP-A- 2006 049 719
- JP-A- 2016 092 949
- US-A- 4 782 994
- US-A1- 2017 368 590

## Description

### FIELD

The present disclosure is generally related to a method of producing a lamination stack assembly from a plurality of stamped material for electrical components, in particular for a rotor and stator core of an electric motor. More particularly, the method relates to creating a multilayer arrangement of thin sheet material joined together by adhesive in line with and prior to a stamping press for creation of a final lamination stack. The present disclosure further describes alternative adhesive types, application methods, and application patterns to form the multilayer component and to construct the final lamination stack assembly.

### BACKGROUND

This section provides background information related to the present disclosure which is not necessarily prior art.

Currently, electric motor rotor and stators utilize cores created from laminations produced from a multitude of stamped electrical sheet steel stacked vertically together. A stamping press is fed a single sheet and is used to punch individual single sheets via progressive stamping. It is preferable to create the laminations from coated electrical sheet steel which is as thin as possible (< 1.0mm) to maintain electromagnetic isolation between the sheets to improve the electric motor performance and efficiency. These individual sheets are then stacked and assembled to from a multiple layer lamination. The method known to connect the individual sheets into laminations includes mechanically mating via welding or interlock. Bonding the sheets together with epoxy adhesives, backlack bonding varnish, or other adhesives to form the rotor or stator core have also been utilized. The thinness of the material results in limitations to the effectiveness for mechanical mating or welding techniques, so adhesives are now preferred. Currently utilized epoxy-based adhesives or backlack bonding varnish require significant heat curing processes which increase the energy usage and cycle time to form a finished lamination stack. Therefore, there is a need to improve the rotor or stator lamination production process.

JP 2006 049719 A discloses a method for manufacturing a laminated core, comprising: a punching, laminating and fixing step; a step of impregnating the laminate obtained by the punching, laminating and fixing step with a thermosetting adhesive; and a step of drying and baking the laminated body, wherein the punching, laminating and fixing step comprises that a fixed laminated body is obtained by continuously punching a soft magnetic steel strip and simultaneously laminating and fixing a plurality of soft magnetic steel plates obtained by the punching step.

JP 2016 092949 A discloses a punching method, comprising the steps of preparing a wound body of at least two electromagnetic steel sheets; supplying a workpiece consisting of at least two electromagnetic steel sheets pulled out from each of the wound bodies and fixed to each other in a stacked state to a die; and punching the workpiece in the die, wherein the widths of the two electromagnetic steel sheets constituting the two wound bodies are different from each other.

DE 10 2019 213658 A1 discloses a Method for producing a sheet metal stack, in particular an electrical sheet metal package, the method comprising the following: coating one or more sheets with a connecting material; connecting a plurality of sheets to form a sheet metal laminate by a first activation of the connecting material; dividing the sheet metal laminate to produce a plurality of sheet metal laminate units and/or dividing a plurality of sheet metal laminate units out of the sheet metal laminate; and connecting the plurality of sheet metal laminate units to form a sheet metal stack by a second activation of the connecting material, wherein one or more parameters differ from one another in the first activation and the second activation.

### SUMMARY

It is an object of the disclosure to provide an improved rotor or stator lamination process. In one aspect, the process includes stamping more than a single layer with each stroke of the press and joining the layers together with an improved adhesive technology and application method.

The object is achieved by a method of producing a lamination stack assembly for electrical components as disclosed in claim 1.

The method disclosed relates to creating a multilayer arrangement of thin sheet material joined together by adhesive prior to further processing in line with a stamping press for creation of a lamination stack for rotors and stators of an electric motor. The disclosure further describes alternative adhesive types, application methods, and adhesive application geometries to form the multilayer sheet component and to construct the final lamination stack assembly using two or three adhesive application stations.

The sheet steel materials proposed are electrical steel which is a soft magnetic material with enhanced electrical properties. Electrical steel can also be referred to as silicon steel due to the increased silicon content. Typical thickness of the electrical steel used in lamination applications is between 0.10 and 0.50mm thickness. The sheet material is received with a coating (i.e AISI-ASTM A 976-9 standard C3, C5, or C7) utilized to insulate the electrical steel sheets to increase electrical resistance between laminations, reduce eddy currents, provide resistance to corrosion, and to act as a lubricant during the stamping process. The adhesives and activators proposed in this disclosure are functional with the coatings typically used as described above and require no additional backlack. The electrical sheet steel utilized in this process can either be non-grain-oriented electrical steel (NGOES) or grain-oriented electrical steel (GOES), but non-grain-orientated electrical steel (NGOES) is preferred in rotor and stator laminations as specifically described in this disclosure. Optionally, an iron-based low loss amorphous material may be utilized when in a form with similar thickness to the silicon steels described.

The adhesives for creating the bonds between the layers to form the multilayer construction, and later in the process to produce the lamination stack, are of either anaerobic or cyanoacrylate technology. The anaerobic adhesives cure in the absence of oxygen and may be, as an example, dimethacrylate ester, urethane acrylate, or urethane methacrylate chemical types. The cyanoacrylate adhesive is derived from ethyl cyanoacrylate and related esters. Activators to improve the bond of the anaerobic adhesives can also be optionally used to further promote curing effectiveness in a reduced timeframe. These adhesives and optional activators are chosen because they form strong bonds without the need to introduce significantly higher temperatures than room temperature, as seen in backlack or epoxy based adhesive systems. Due to the work and movement of the material through the multilayer forming device and lamination forming device processes, heating upwards of 40 Degrees C is naturally created within the formation of the multilayer lamination device. Further curing improvements may be accomplished if additional heat up to 80 Degrees C is added, which can be added via chambers surrounding the multilayer forming device prior to the stamping tool or surrounding the lamination assemblies. These temperatures and durations are well below those required for curing thermosetting epoxies and polyester resins used in other lamination assemblies. The adhesives disclosed are applied directly to the face of the coated sheet material or laminations prior to joining, and can be applied with a variety of dispersion methods. Dispersion of the adhesive onto the surface can be via contact or contactless methods. Contactless methods including spraying, applying a thin amount over a larger area, or discharging a specific amount from a nozzle in the form of a dot for localized application. Contact methods including rolling, depositing, screen printing, or wiping, and can also be used if larger areas are required to be covered by adhesive.

In another aspect, in combination with the anaerobic adhesives, an optional activator may be utilized to improve curing times, eliminate the need of elevated heat curing, and improve adhesive effectiveness between the coating layers. The activators proposed are solvent based, as an example methacrylate or acetone, which will clean the surface, activate the surfaces in preparation for contact with the anaerobic adhesive, and evaporate quickly. The activator may be applied to a separate surface than the anaerobic adhesive, and then the surfaces can be brought together under pressure. The pressure may be applied from the roll feeder when forming the multilayer material sheet, or the activation of the press when creating the lamination assemblies. As the activator and the adhesive application are done at different locations in the process, the activator applicator can be positioned in a manner to provide a time delay between when the activator is applied to the first surface and the adhesive is applied to the second surface to further promote adhesion when the surfaces are brought together. For instance, the activator application may be positioned prior to the single layer roll feeder, while the adhesive applicator of the first application station is positioned later in the process. For instance, the adhesive applicator could be located between the single layer roll feeder and the multilayer roll feeder, just prior to when the surfaces of the upper and lower layers are joined. The application of the activator can be the same contacting and non-contacting methods as described for the adhesive. The area where the activator is applied aligns with the area where adhesive is applied when the material faces are brought together for a proper bond.

Two processes to form a multilayer lamination assembly for a rotor and/or stator are provided. In both non-limiting examples, the multilayer sheet component formed has two layers, but the equipment and processes described can be expanded in parallel operations within the multilayer lamination device to create a multilayer material sheet with additional layers beyond two. For a two-layer design, a parallel process is utilized in a first section where two long, separate sheets of wound coil material are processed to ensure the material is flat and unwound using standard techniques. Each layer of material enters a first adhesive application station where adhesive is applied to the upper surface of the lower material layer while, optionally, an activator is applied to the lower surface of the upper later of material. Due to the thin viscosity of the adhesive, it is preferable to apply the adhesive to the upper surface of the lower layer, but if viscosity were to be increased, or the application method allows, the adhesive could potentially be applied to the lower surface of the upper layer as well. In such an arrangement, the optional activator application surface would change to the opposite surface of where the adhesive is applied. The separate layers are brought together and compressed between rollers which results in the adhesive bonding the layers tightly together to create the multilayer material sheet. At this point, curing has begun within the ambient temperature of the environment. This multilayer material sheet is received in the form of a single combined sheet by the lamination forming device, which includes a second and third adhesive application station, as well as the stamping press to stamp and blank the single multilayer sheet into individual rotor and stator laminations, which are then assembled into rotor and stator lamination assemblies or stacks.

In a comparative example not belonging to the invention, a process includes two adhesive application stations. A first adhesive application station is used to bond the multilayer sheet component together while the second adhesive application station dispenses adhesive to form a lamination stack from lamination plates blanked from the multilayer sheets. The second adhesive application station applies adhesive prior to any stamping or blanking operations to create the stator or rotor lamination plates, and applies adhesive and an optional activator to the surface of the multilayer sheet in a variety of patterns further described.

The process according to the invention uses the same first adhesive application station for bonding of the multilayer sheet, but a second and third adhesive application stations are positioned within the stamping tool. The second adhesive application occurs immediately prior to the blanking of the rotor lamination plate, while the third adhesive application occurs immediately prior to the blanking of the stator lamination plate. Blanking shall be understood as the final stamping operation to separate the rotor or stator lamination plate from the combined multilayer material sheet. Further according to the invention, adhesive is applied immediately prior to the blanking operation to specific areas that become the rotor or stator lamination plates to reduce contamination with the stamping tool. This adhesive applied at stations two and three is done in preparation for creating a stack of laminations to form the rotor and/or stator lamination assembly. The method of applying the adhesive and optional activator to the various surfaces will be described in further detail, but the intention is to apply adhesive in order to bond the individual blanked sheets together to form the lamination stack of the rotor and stator. Because the remaining unused scrap material of the multilayer sheet leaves the lamination forming device, the overall process creates a fully bonded stator lamination stack assembly and a rotor lamination stack assembly in an optimized manner.

In one aspect, the adhesive application stations apply the adhesive and the optional activator in a variety of ways. It was previously described how the application system can deposit adhesives onto the surfaces of the electrical steel in different methods, but the pattern that is utilized by the application system can also be varied at the different adhesive application stations. In each of the pattern designs, which will be described in further detail herein, there is a balance between the amount of adhesive used, the accuracy requirement of the adhesive application location, and potential adhesive contamination on the punching tools. Each pattern may also have a different influence on the final functionality of the electrical motor, due to impacts to the electromagnetic performance if there is a loss of isolation between layers at the edges of the laminations. This effect is due to the creation of a burr on the cut edge. The adhesive patterns range from full-face bonding, where the entire surface of the coil has adhesive applied, to a dot bonding approach where adhesive is only applied to select local areas within the final stator or rotor lamination. In one aspect, there can be a difference to the amount and pattern of the adhesive applied at each of the adhesive application stations. Also, an optional activator may be applied in a similar patterned approach as the adhesive, varying between full coverage or localized application. In the case of a localized application, such as dots, the activator and the adhesive are deposited on the separate surfaces in a controlled positional manner that will result in an alignment and interaction when the separate layers are brought together. If a particular adhesive, which requires activator to cure, contacts the opposite layer and no activator is present proper bonding will not occur. However, adhesive that does not require an activator to cure, but that may still use an activator, may still bond in the event the activator is not present in a matching area.

Utilizing these adhesive compositions and application methods without requiring elevated curing temperatures to create a multilayer sheet prior to introduction into a stamping press provides an efficient and cost-effective approach to producing lamination stacks for rotors and stators. Utilizing the method described, overall production time is reduced with reduced operational costs due to creating and utilizing a multilayer material sheet as the blank material for the laminations, and not requiring significantly increased temperatures to bond the layers of the lamination assembly together.

It is a related aspect of the present disclosure to form the multilayer material component in line with and to feed it directly to the stamping press to form the final lamination assembly.

It is a related aspect of the present disclosure to utilize existing high-speed stamping techniques to stamp a multiple layer construction, reducing the overall cycles required and reducing handling to produce a complete lamination stack assembly.

It is a related aspect of the present disclosure that the multilayer construction can be formed from two, three, four or more individual layers depending on the stamping process and overall thickness of the single sheet material.

It is a related aspect of the present disclosure to form the multilayer construction from layers of differing material thicknesses or material types to create a non-homogeneous structure.

It is an aspect of the present disclosure to utilize an adhesive technology that cures at room temperature or at a slightly elevated temperature sufficiently enough to form a multiple layer sheet product in line with and between a decoiler and the stamping press.

It is a related aspect of the present disclosure to utilize anaerobic or cyanoacrylate adhesive technology types.

It is a related aspect of the present disclosure to utilize a single adhesive type through the full process of creating a rotor and/or stator lamination.

It is a related aspect of the present disclosure to utilize an optional activator applied to the sheet steel material prior to the application of the adhesive to initiate curing action, improve curing times, reduce the need of high heat curing, and improve adhesive effectiveness.

It is a related aspect of this disclosure for the adhesive to be applied prior to the roll feeder that joins the individual sheets to create a stable single combined multilayer metal sheet construction for further pressing operations.

It is a related aspect of this disclosure for the optional activator to be applied earlier in the process than the adhesive to improve bonding in the formation of the multilayer metal sheet.

It is a related aspect of this disclosure to apply the adhesive above the individual sheet material and the optional activator from below the individual sheet material prior to the formation of the multilayer material.

It is a related aspect of this disclosure to apply the adhesive and/or optional activator for the lamination construction from above or below the combined multilayer material depending on tool design, and accuracy of the adhesive application.

It is a related aspect of this disclosure that the adhesive and/or activator may be applied by non-contacting spray, non-contacting or contact depositing, and/or brush or roll application methods.

It is an aspect of the present disclosure that the adhesive application for rotor and stator lamination construction can be applied to all required surfaces prior to any stamping operations at an adhesive application station positioned prior to the stamping tool or within the stamping tool.

It is an aspect of the present disclosure that the adhesive application for the rotor and the stator lamination construction can occur within the stamping tool immediately prior to a blanking operation of the rotor and stator lamination plates.

It is a related aspect of the present disclosure to apply adhesive immediately prior to the blanking operation of the rotor and stator lamination plates to reduce contamination to the stamping tool from the adhesive.

It is an aspect of this disclosure to provide a method of optimized adhesive application geometries to create a stable multilayer metal sheet, which may vary from the adhesive application geometries and adhesive volumes utilized to further create the lamination stack in order to optimize the amount of adhesive used.

It is a related aspect of this disclosure to apply the adhesive and/or activator in application geometries which vary from full face bonding to localized bonding positions including rings or dots of adhesive.

It is a related aspect of this disclosure to position the application of the optional activator on the first sheet layer in such a way that it will align with the adhesive applied in a similar position on the second sheet layer when they are brought together to form the multilayer sheet.

It is a related aspect of this disclosure that the location of the adhesive and/or optional activator application system can be adjusted in the X/Y plane to optimize the adhesive application location on the coil material.

According to the invention, the rotor and stator will be produced from same area of the sheet material, wherein the rotor lamination geometry will be formed from the material radially inward of the material utilized to form the stator lamination geometry.

It is a related aspect of the present disclosure to utilize butt welding to connect lengths of electrical sheet steel between the decoiler and the straightening machine to further improve throughput and reduce material handling.

These and other features and advantages of the present invention will become more readily appreciated when considered in connection with the following detailed description and appending drawings.

### BRIEF DESCRIPTION OF THE DRAWINGS

The drawings described herein are for illustrative purposes only of selected embodiments and are not intended to limit the scope of the present disclosure. The inventive concepts associated with the present disclosure will be more readily understood by reference to the following description in combination with the accompanying drawings, in which:
FIG. 1 is an overall view of a multilayer lamination device according to a comparative example not belonging to the invention, with two adhesive application stations:
FIG. 2 is an overall view of a multilayer lamination according to the invention, with three adhesive application stations;
FIG. 3 is an example of adhesive applied as full face bonding;
FIG. 4 is an example of adhesive applied as an alternative full face bonding;
FIG. 5 is an example of adhesive applied only to active stator/rotor surfaces;
FIG. 6 is an example of adhesive applied as concentric rings to the stator/rotor active surfaces;
FIG. 7 is an example of adhesive grid dot bonding;
FIG. 8 is an example of adhesive dot bonding.

### DETAILED DESCRIPTION

Example embodiments will now be described more fully with reference to the accompanying drawings. It is to be recognized the example embodiments only are provided so that this disclosure will be thorough, and will fully convey the scope, which is ultimately defined by the claims, to those who are skilled in the art. Numerous specific details are set forth, such as examples of specific components, devices, and methods, to provide a thorough understanding of embodiments of the present disclosure. It will be apparent to those skilled in the art that certain specific details need not be employed, that example embodiments may be embodied in many different forms, and that neither should be construed to limit the scope of the disclosure or the claims. In some example embodiments, well-understood processes, well-understood device structures, and well-understood technologies are not described in detail. It will be further appreciated that reference made to particular aspects being optional does not imply that other aspects are not also optional in the absence of such a designation. It will be further appreciated that reference made to particular aspects being preferred does not imply that other aspects are not also preferred in the absence of such a designation.

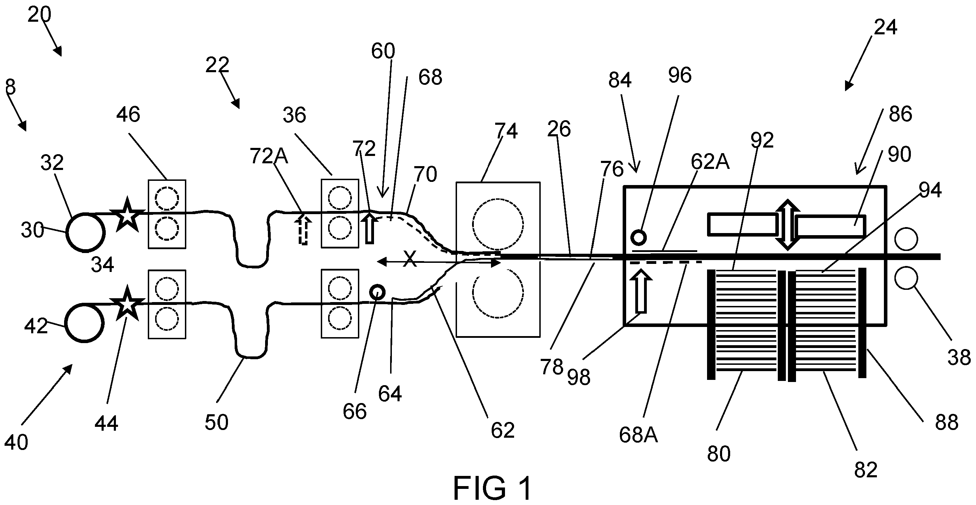

FIG. 1 provides an overview of one comparative example of a multilayer lamination device 20, which includes a multilayer forming device 22 followed directly by the lamination forming device 24. The multilayer forming device 22 is shown in this example to join two layers of sheet material to create the multilayer material sheet 26. Multilayer forming device 20 in this two-layer example includes an upper layer processing device 28 and a lower layer processing device 40. If additional layers beyond two are required, additional layer processing devices as described would be positioned in parallel (for example above or below the two shown) prior to the lamination forming device 24 to create a multilayer material sheet 26 of three, four, or more layers.

For the two-layer multilayer material sheet 26 in this example, the upper layer processing device 28 receives the upper electrical sheet coil material 30, removed from coil 34 by the decoiler 32 in conjunction with the single layer roll feeder 36 and coil puller 38 positioned at the end of the process. Note, the lower layer processing device 40 will receive the lower electrical sheet coil material 42 in a similar manner. The width of the electrical sheet coil materials 30 and 42 will be at minimum similar to the outside diameter of the stator and rotor stacks being manufactured. The material length will be significantly longer than the width allowing for a continuous feed of strip-like material to both the upper and lower layer processing devices 28 and 40. To further increase production capability, a coil sheet welder may be included to butt weld 44 end portions of the coil material together to a starting portion of a replacement coil. In one aspect, the butt welding location may be between the decoiler 32 and the straightening machine 46. This butt welding process can result in an endless strip of coil material provided to both the upper 28 and lower devices 40 of multilayer lamination device 22, thereby increasing production and reducing handling requirements. The upper electrical sheet coil material 30 and lower electrical sheet coil material 42 are each fed into separate straightening machines 46 to flatten the material (due to being wound around the coil) to provide that the final lamination layers can lay parallel and tightly against each other when joined. The straightening machine 46 and the single layer roll feeder 36 for each layer may be positioned and operated at a feed rate to allow a strip loop 50 of loose material to hang freely in between. Each individual electrical sheet coil material 30 and 42 may pass thru a single layer roll feeder 36 to continue to move the material towards the first adhesive application station 60. Up to this point in the process, the upper electrical sheet coil material 30 and lower electrical sheet coil material 42 have been processed thru the processing devices 28 and 40 in similar parallel processing steps. The above-described straightening machine 46 may also be optional, depending on the needs and performance of the process.

Continuing to refer to FIG. 1, as each electrical sheet coil material 30 and 42 enters the first adhesive application station 60, adhesive 62 is applied to the upper surface 64 of the lower electrical sheet coil material 42 by applicator 66. The adhesive 62 is applied to the upper surface because it is easier to deposit the adhesive in the direction of gravity due to the viscosity of the adhesive. Optionally, at this location, activator 68 may be applied to the lower surface 70 of the upper electrical sheet coil material 30 via applicator 72 to improve bonding performance of adhesive 62. It is possible the surfaces adhesive 62 and activator 68 could be applied to surfaces opposite of those described in this example as well. A predetermined distance "X" between the adhesive applicator 66 and multilayer roll feeder 74 will allow sufficient time for any chemical reactions required in preparation of bonding to occur before the optional activator 68, adhesive 62, and the surfaces 70 and 64 of the electrical sheet coil material 30 and 42 are brought together at the multilayer roll feeder 74. If additional time is required for the optional activator 68 to prepare the surface and evaporate from the lower surface 70 of the upper electrical sheet coil material 30, the activator applicator 72 may be positioned earlier in the process, for instance prior to the single layer roll feeder 36 as shown by 72A. After the adhesive 62 and the optional activator 68 are applied, the multilayer roll feeder 74 compresses each electrical sheet coil material 30 and 42 tightly together to create the multilayer material sheet 26. The adhesive volume dispensed is selected to accomplish proper bonding between the layers without resulting in excessive adhesive oozing out between the layers, as this would be detrimental to further pressing operations. At this stage, curing begins and the materials are received by the lamination forming device 24 as a single piece combined multilayer material sheet 26 that provides the base material for forming the rotor and stator laminations, with bare coated electrical steel on the top 76 and bottom surface 78 of the multilayer material sheet 26.

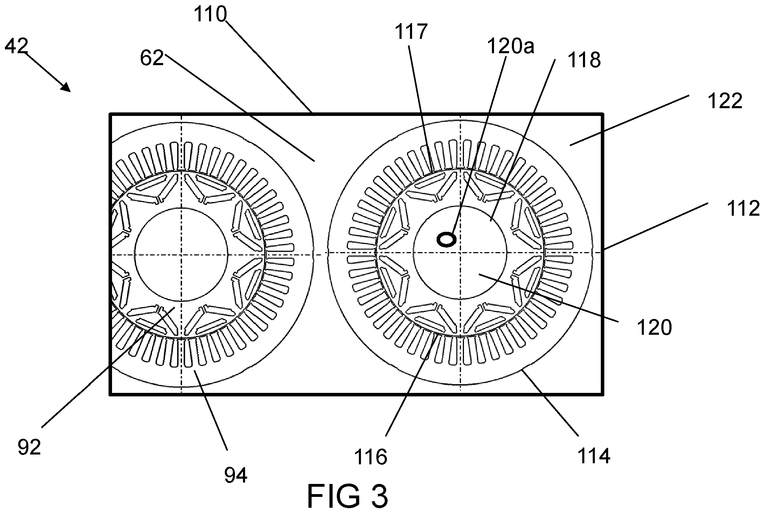

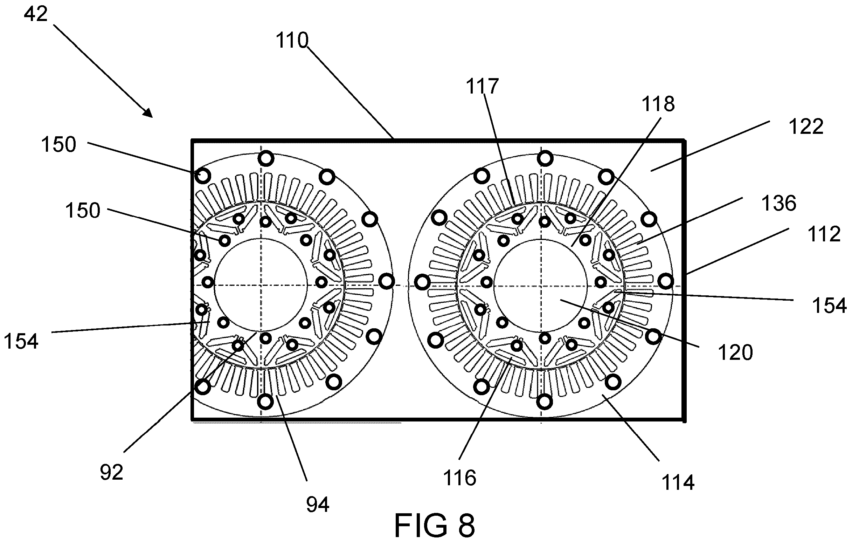

The adhesive applicator 66 may be X/Y adjustable relative to the layers, to ensure that the adhesive is applied within the projected final location of the lamination stamping that occurs. For instance, in adhesive applications in which the location of the adhesive is desired to be controllable, the goal is to apply the adhesive to functional areas of the resulting rotor and stator plates rather than across the entire surfaces. Thus, X/Y adjustment can be used to control the precise area where the adhesive is applied. Some example options for controlled adhesive application locations can be seen in Figures 3-8. For example, Figure 8 illustrates an example of precise control of adhesive dots that avoid areas of windings or magnets.

Multilayer roll feeder 74 is illustrated as having a pair of opposing rollers feed and combine the two layers of material together following application of adhesive therebetween. However, it will be appreciated that this illustration is schematic, and that the illustration may also be applicable to a multi-layer roll feeder unit that includes a separate feeder and a separate 2 in 1 combiner. In this aspect, the feeder or feeders of multilayer roll feeder 74 may convey the layers forward in the process, with the 2-in-1 combiner applying force to put the layers together. While the main function of the 2-in-1 combiner is to apply the force, the rolling action will also provide the ability to advance the layers, in combination the other feeding mechanisms, at the same speed. The feeder mechanism of multilayer roll feeder 74 may be before or after the 2-in-1 combiner mechanism.

To precisely control the position of the coil material, in particular the lower electrical sheet coil material 42 upon which adhesive is applied at adhesive applicator 66, the lower electrical sheet coil material 42 is held in tension during the process. This tensioning and controlled positioning of the lower electrical sheet coil material 42 ensures that the location of the applied adhesive 62 is correct relative to the actual location of the rotor lamination plate 92 and stator lamination plate 94 that are stamped out of the material. To achieve this tension and precise positioning, the feeder mechanism within multilayer roll feeder 74 acts as a master control, from which other feeders and/or pullers follow, including the bottom single-roll feeder 36, the 2-in-1 combiner of the multilayer roll feeder 74, and coil puller 38. This arrangement ensures tension in the lower electrical sheet coil material 42 and a synchronized advancement of material through the process, which limits instances of curling up/down of the material, which could lead to separating of the electrical sheet coil materials 30, 42 or slipping of the electrical sheet coil materials 30, 42 relative to each other due to the differences in rolling forces between upper and lower electrical sheet coil materials 30, 42.

Moving to the right side of FIG. 1, the multilayer material sheet 26 is received by the lamination forming device 24 positioned in line with the multilayer forming device 22. The function of the lamination forming device 24 is to process the multilayer material sheet 26 into a bonded stack of a final rotor lamination assembly 80 and a final stator lamination assembly 82. The lamination forming device 24 includes a second application station 84, a stamping tool 86 positioned within a stamping press, and two separate stackers 88 for the final formation of the rotor and stator lamination assemblies 80 and 82. Stamping tool 86 will progressively form features via stamping into the multilayer material sheet 26 via the vertical movement of punch 90 into a die (not depicted), resulting in an operation of blanking out an individual rotor lamination plate 92 from the center portion of the multilayer material sheet 26, and then subsequently stamping features and then blanking out an individual stator lamination plate 94 from the surrounding remaining multi-layer material sheet 26 radially outward of the removed rotor portion.

FIG. 1 shows a simplified arrangement of a single stamping station to form the rotor and stator plates, but it should be understood the stamping tool 86 may include multiple stamping stations, each forming a variety of specific features, such as magnet pockets or winding slots, into the individual rotor and stator lamination plates 92 and 94 as the multilayer material sheet 26 is indexed thru the stamping tool 86.

Continuing to refer to FIG. 1 details of the second application station 84 will be provided. Second application station 84 is positioned in the process line to be prior to any stamping operations. This positioning can include physically positioning the second application station 84 prior to the stamping tool 86 or integrating station 84 into stamping tool 86. In this aspect, the multilayer material sheet 26 receives a second treatment of adhesive 62A and optional activator 68A from second application station 84. This adhesive 62A and (optional) activator 68A are may be the same type and chemical composition as used earlier in the process. The adhesive 62A and (optional) activator 68A are applied in preparation for creating a combined stack of rotor and stator lamination assemblies 80 and 82 from rotor and stator lamination plates 92, 94. The rotor lamination assembly 80 is made of several dozen individually stamped ring-shaped rotor lamination plates 92, with adhesive 62A located in between each layer of rotor lamination plates 92. As the rotor lamination plates 92 s are placed into stacker 88, force from the stamping tool 86 is utilized to apply pressure to the stack as it is built from the bottom up in the stacker 88, thereby bonding each rotor lamination plate 92 together. Once the targeted height of rotor lamination assembly 80 is achieved, the stack is removed from stacker 88 and the process of building up a new rotor lamination assembly 80 may begin again. The stator lamination assembly 82 is assembled in the same way. Creating and utilizing a multilayer material sheet 26 decreases the number of stamping operations to produce a given height lamination assembly, because multiple layers are processed via each stroke of the press rather than using a single layer material. In one aspect, heat may be utilized within the stackers 88 to form the stacked assemblies (for instance 110 degrees C). Otherwise, heat is generally not applied prior to this stage.

In this FIG. 1 comparative example, the second adhesive applicator 96 applies adhesive 62A to the top surface 76 of the multilayer material sheet 26 prior to the stamping operations of the rotor or stator lamination plates 92 and 94. If an optional activator 68A is used, it is applied to the bottom surface 78 of the multilayer material sheet 26 via the second activator applicator 98. The application of the adhesive 62A and activator 68A can be performed in a similar manner as described for the first adhesive application station 60. Depending on the press configuration and environment for locating the second adhesive application station 84, the surfaces which the adhesive 62A and activator 68A are applied to may be reversed. For instance, adhesive 62A could instead be applied to the bottom surface 78 of the multilayer material sheet 26, particularly if during press operation the multilayer material sheet 26 is displaced in the vertical direction as it enters the stamping press, because this could facilitate easier displacement of adhesive 62A in a contacting method, because the applicator 96 could remain stationary while the multilayer material sheet 26 is brought into contact with the applicator. On the other hand, if the multilayer material sheet 26 has no vertical displacement as it travels towards the stamping press, it may facilitate applying the adhesive 62A on the surface via a spray or droplet in an easier manner from above. There will also be situations where adhesive 62A or (optional) activator 68A will be purposely not applied to the multilayer surface 26, particularly when the stamped lamination from the multilayer material sheet 26is the starting bottom piece of a rotor and/or stator lamination assembly 80 and/or 82 or is the finishing top piece of the rotor and/or stator lamination assembly 80 and/or 82.

The lamination forming device 24 described above (and modified lamination forming device 24' described below) is preferably isolated from the structure of the roll feeders 36 and 74 and also isolated from the structure of coil puller 38. This isolation increases accuracy of the lamination forming by reducing vibrations from the press that may otherwise propagate to the feeders/pullers.

In addition to the above-described controlled feeding and vibration isolation to improve accuracy, the upper and lower electrical sheet coil materials 30, 42 may be mechanically interlocked with each other prior to the punching/stamping/blanking. This mechanical interlocking connection may be provided via a punch, such as an additional punch 90, disposed prior to the punch 90 that creates rotor lamination plates 80. This further punch 90 may be disposed within lamination forming device 24, 24' or outside of lamination forming device 24, 24' after multilayer roll feeder 74. The mechanical interlocking connection 120a may be provided in a scrap portion 120 or 122 (See Figure 3), that does not become part of the final rotor or stator. This mechanical connection further maintains the locations of the electrical sheet coil materials 30, 42 relative to each other.

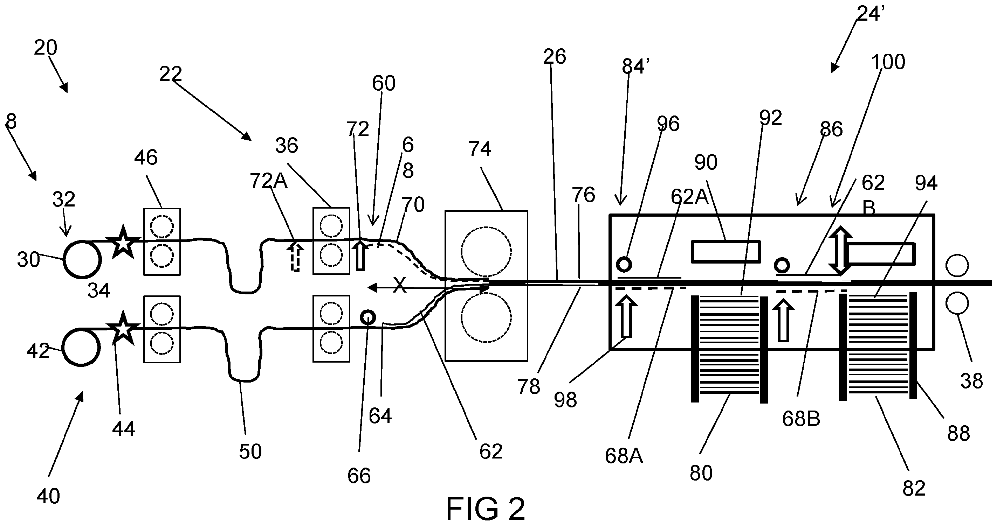

FIG 2. provides an overview of an embodiment according to the invention of the multilayer lamination device 20 which again includes the multilayer forming device 22 followed directly by a modified lamination forming device 24'. In this embodiment the function and features of the multilayer lamination device 20 as previously described remains unchanged, including the activator being optional. Lamination forming device 24' is modified to position the second application station 84' immediately prior to the blanking operation of the rotor lamination plate 92 and adding a third application station 100 immediately prior to the blanking operation of the stator lamination plate 94. The application stations each include adhesive applicators and optional activator applicators. Stamping operations to form various features into the rotor and stator lamination plates 92 and 94 occur prior to the adhesive application. Second application station 84' differs from second application station 84 of the first embodiment as it applies adhesive 62A and optional activator primarily to the area on multilayer material sheet 26 that becomes rotor lamination plate 92, rather than to both rotor and stator areas. The third application station 100 applies adhesive 62B and optional activator 68B to the remaining material of multilayer material sheet 26 or specifically applied to the ring-shaped portion of material from which the stator lamination plate 94 is blanked or both areas.

It is preferred that adhesive 62A and 62B is applied in a manner which will result in minimal contact with punch 90 during the blanking process to reduce contamination. As described in the original embodiment, adhesives in the second and third application stations 84' and 100 can apply adhesive and optional activator to either the top surface 76 or bottom surface 78 of multilayer material sheet 26 in the second application station 84. In a similar manner, adhesive 62B and activator 68B are proposed to be of the same type and chemical composition as 62A and 68A. Due to the arrangement of alternating layers of bonding agent and lamination plates, the surfaces on which the second application station 84' applies adhesive 62A will be the same surfaces as the third application station 100 applies adhesive 62B. The positioning of the second adhesive application station 84' prior to the rotor blanking and the third adhesive application station 100 prior to the blanking of stator lamination plate 94 provides the benefit of reduced risk of glue contamination onto the tooling, because adhesive is applied immediately prior to the blanking operation. If adhesive 62A and 62B were to be applied by the applicators prior to the multiple pressing operations to form the magnet pockets and stator wire winding slots in the rotor lamination plates 92 and stator lamination plate 94, it is likely punch 90 would be contaminated by the adhesives. Separating the second application station 84' from the third application station 100 can also provide flexibility in the optional application of activator 68, potentially staggering the time from activator application to adhesive application within the process, improving cure times at room temperatures. Other features previously described in the second application station 84 can also apply to the third application station 100.

In one aspect, the system preferably does not include application of an activator at stations 60, 84, 84', or 100 via applicators 72, 72A, 68A, 68B. Figures 1 and 2 each include illustrations of these applicators and applied activators in the event that application of the activator is desirable, but it will be appreciated that the provided illustration is not limiting and that such application is not required. Preferably, only adhesive is applied at the stations 60, 84, 84' and 100.

Each of the Figures 3-8 depict a short length of coil material overlaid by an outline of rotor lamination plate 92 surrounding stator lamination plate 94, and further show a variety of patterns that the adhesive 62 may applied to the coil material. These adhesive patterns can be applied at first adhesive application station 60 to form the multilayer material sheet 26, or at the second application station 84 and third application station 100 to form the lamination assemblies 80 and 82. As an example, the figures will each show how different patterns of adhesive 62 can be applied at the first adhesive application station 60 to the upper surface 64 of lower electrical sheet coil material 42. It should be understood these figures can also describe patterns which the optional activator 68 would be applied in a similar arrangement as well, or where adhesive 62 can be applied at later stages in the process at application stations 84, 84' and 100. Each figure will be representative of a short length 110 of the longer strip of lower electrical sheet coil material 42. The width 112 of the material can be selected to be slightly wider than the outer diameter 114 of stator lamination plate 94 to utilize as much material as possible. Ring shaped stator lamination plate 94 includes a stator outer diameter 114 and a stator inner diameter 116. The stator inner diameter 116 is slightly larger than the rotor outer diameter 117 of the rotor lamination plate 92. Rotor lamination plate 92 will further include rotor inner diameter 118 that, when formed, will result in a circular scrap portion 120 removed from the center of the rotor lamination plate 92. After the formation of the stator and rotor laminations 92 and 94, the remaining portion of excess coil material 122, with multiple circular shaped cutouts resulting from the stamping operation, will exit the lamination forming device 24 by the actions of coil puller 38. The designs of the rotor lamination plate 92 and stator lamination plate 94 should not be considered limiting designs or arrangements, only an example to further explain the various patterns of adhesive applied. Features such as magnet pockets and stator wire winding slots can vary from application to application, and illustrations of such example designs herein shall not be limiting.

FIG. 3 represents a full-face bonding application of adhesive 62. In this illustrated aspect, adhesive 62 is applied to substantially the full extent of the coil material 122 with consistent and complete coverage substantially entirely along length 110 and across width 112. Advantages of this technique include, but are not limited to, that the highest strength and the stamping position of the stator and the rotor lamination plates 92 and 94 does not have to be as tightly controlled, because there is no positional relationship of the adhesive 62, because it is covering the entire surface of the material from which the stator and the rotor lamination plates 92 and 94 are blanked. The compete coverage arrangement also improves isolation between the layers, because there is guaranteed to be adhesive across the entire face of the rotor or stator lamination plates 92 and 94. Because adhesive 62 is applied to the scrap material portions 120 and 122, excessive adhesive is used. One drawback is, because adhesive 62 is applied across the entire surface, the punch 90 could become contaminated with adhesive 62 because it will cut into areas which have been covered by adhesive.

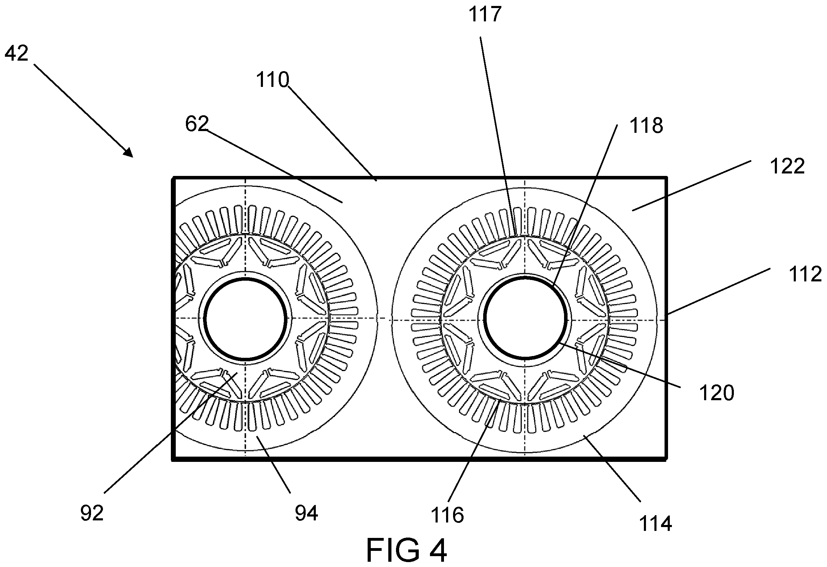

FIG. 4 represents a full-face bonding application of adhesive 62, similar to FIG. 3, except with adhesive not applied within the circular scrap portion 120. Adhesive 62 has been applied nearly to the full extent of the coil material covering the surface along length 110 and across width 112, with the exception of the portion inward of the rotor inner diameter 118 that will become the scrap portion 120. Because the circular scrap portion 120 is not included in the final lamination assembly the lack of adhesive 62 has no impact on functionality. Advantages of this technique include, but are not limited to, maintaining the highest strength, because within the lamination the layers are fully bonded; however, some alignment is required to ensure that the rotor lamination plate 92 is stamped from the area where adhesive 62 has been applied. Isolation between layers is still guaranteed because adhesive covers the entire face of the rotor and stator lamination plates 92 and 94. Because adhesive 62 is not applied to scrap portions 120, some adhesive material is saved, but adhesive 62 is still applied to the outer scrap material portion 122. Punch 90 may still become contaminated when stamping through the adhesive in areas outward of rotor inner diameter 118.

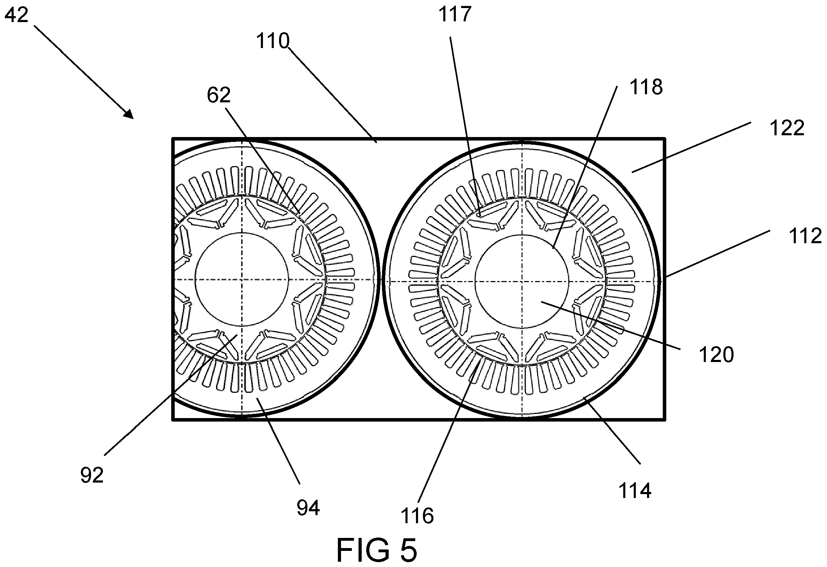

FIG. 5 represents an optimized pattern of applied adhesive which maintains the full face contact across the areas of the final stamped portion of the rotor and stator lamination plate 92 and 94, but eliminates the waste of adhesive 62 on surfaces which become scrap later in the process. Adhesive 62 is applied fully from the rotor inner diameter 118 to the stator outer diameter 114.

Because areas where adhesive 62 is not applied are not included in the final lamination assembly, there is no negative impact on functionality in the final product. Advantages of this technique include, but are not limited to, maintaining the highest strength because within the lamination the layers are fully bonded, but alignment is required to ensure the rotor lamination plate 92 and stator lamination plate 94 are stamped from the areas where adhesive 62 has been applied. Isolation between layers is still guaranteed because adhesive is covering the entire face of the rotor or stator lamination plates 92 and 94. Because adhesive 62 is not applied to scrap material portions 120 or 122, the adhesive material applied is fully utilized in the final rotor and stator lamination assemblies 80 and 82. Punch 90 has less potential to become contaminated when stamping, because punch 90 will generally only intersect adhesive when forming stator outer diameter 114 and rotor outer diameter 117 and other internal features of the rotor and stator lamination plates. When the third adhesive application station 100 is utilized in the process as in FIG. 2, adhesive 62A will be applied to the rotor lamination plate 92 area prior to blanking plate 92 at adhesive application station 84', and adhesive 62B is applied to the stator lamination plate 94 areas at the third station 100 prior to blanking plate 94. Separating the application of adhesives 62A and 62Bcan further minimize contamination to punch 90.

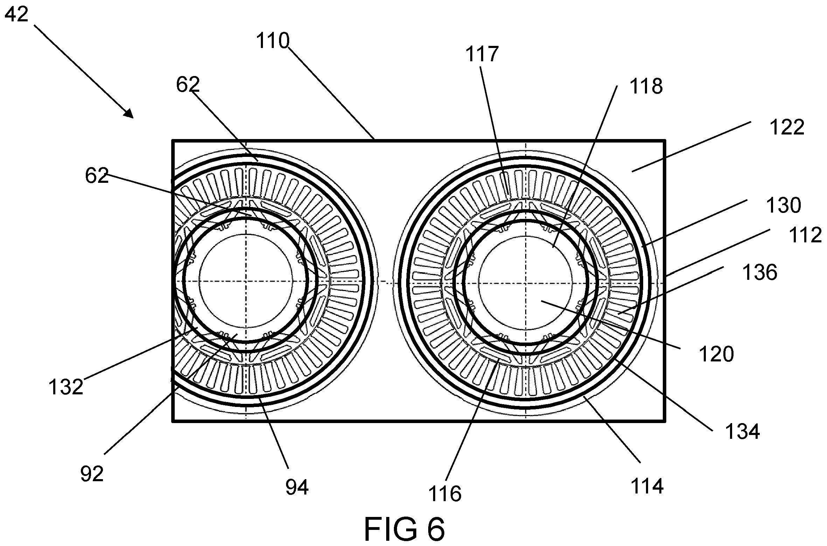

FIG. 6 illustrates the use of rings of adhesive to provide a bonding area around 360 degrees of given widths 130 onto the face of the rotor lamination plate 92 and stator lamination plate 94. In the example provided, a single ring of adhesive 62 is applied to each of the areas which align with the final position of the rotor or stator. A rotor adhesive ring 132 is applied onto the area which would align with the rotor lamination plate 92 while a second, stator adhesive ring 134 would be applied onto the area that aligns with stator lamination plate 94. Rings 132 and 134 are concentrically positioned with respect to each other and positioned centrally to the diameters that are stamped later in the process to form the rotor 92 and stator 94 lamination plates. Although two rings are shown in this example additional rings could be included, with an adjustment in width 130 to allow more rings of adhesive 62 to fit between the rotor inner diameter 118 and the stator outer diameter 114. It is proposed that the stator adhesive ring 134 be positioned towards the stator outer diameter 114 because this position has full face contact, because the stator slots 136 that cause an interruption in the face of the lamination are inward of the stator adhesive ring 134, providing no contamination to punch 90. Rotor adhesive ring 132 may be positioned centrally between the rotor inner diameter 118 and the rotor outer diameter 117. Relatively precise alignment may be used to ensure the rotor and stator adhesive rings 132 and 134 are positioned correctly and are aligned with the rotor and stator lamination plates 92 and 94 that are stamped out later in the process. This ringed arrangement of adhesive reduces waste when compared to the previous full face adhesive arrangements. Because there are areas on the faces of the laminations without adhesive, there may be a potential of reduced isolation and metal connection, particularly on the cut edge of the diameters and other features stamped within the laminations. Alternatively, paired rings of adhesive could be positioned at the stator outer diameter 114, stator inner diameter 116, and rotor inner diameter 118 to improve electrical isolation at these cut edges. If a third adhesive application station 100 is utilized in the process, the stator adhesive ring 134 may be applied at the third station 100, while the rotor adhesive ring 132 may be applied prior to stamping out the rotor lamination plate 92 at adhesive application station 84'. It is proposed that both the stator adhesive ring 134 and rotor adhesive ring 132 are applied together at the first adhesive application station 60 for forming the multilayer material sheet 26, or in the first embodiment at the single second adhesive application station 84.

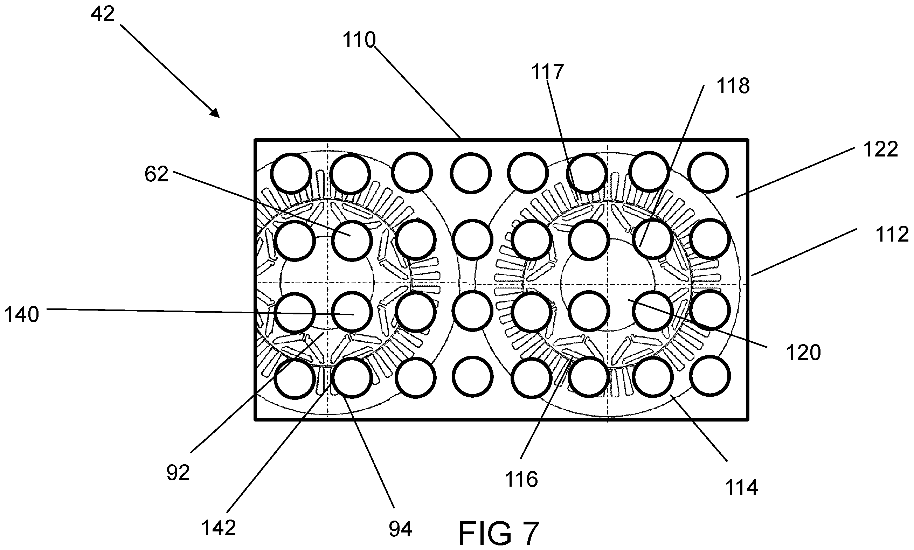

FIG. 7 represents application of adhesive 62 in a grid pattern of dots 140 applied onto the surface of the lower electrical sheet coil material 42. These dots 140 of adhesive can be applied in a uniform manner across the surface of the lower electrical sheet coil material 42, independent of the location where the rotor and stator lamination plates 92 and 94 would be stamped from. An arrangement of four dots 140 of a given dot outer diameter 142 are shown placed across width 112 of the coil material, but the arrangement, number of dots, and outer diameter of dots 142 can be varied to increase or decrease the number of dots 140 in a given area, or the percentage of the surface covered by dots 140. The advantage of such arrangement is that the application of the dots 140 can be applied by various contacting and non-contacting methods.

These methods are typically very quick and have a high level of controllability related to location and the amount of adhesive 62 applied. Because a grid arrangement is utilized that is independent of the final rotor and stator lamination plates 92 and 94 that are formed from the strip of material, alignment is less of a concern. Edge isolation due to a lack of adhesive fully between the faces of laminations and contamination of punch 90 may be drawbacks as described previously in other adhesive application methods. There may also be some usage of adhesive 62 that is applied to surfaces that became scrap, because they are not within the extents of the final lamination areas.

FIG. 8 represents another optimized application of adhesive 62, because it applies dots 150 to specific locations within the final rotor and stator lamination plate areas 92 and 94. This illustration also represents a process requiring relatively precise control in the location and quantity of adhesive 62 applied to the surface of the coil material. Dots 150 may be applied only in strategic areas. For instance, in the area of material which will become the stator lamination plate 94, dots 150 may be located between the stator outer diameter 114 but radially outside of the extents of the stator slots 136. Similarly, in the area which will become the rotor lamination plate 92, dots 150 may be positioned in a way to avoid the areas formed for the magnet pockets 154. The number of dots 150 and the amount of adhesive 62 applied may be based on functional and structural requirements of the final lamination stack. The complete arrangement of dots 150 as shown in FIG. 7 may be applied at the first adhesive application station 60 to bond the layers together to create the multilayer material sheet 26. In the second application station 84, all dots 150 may be applied to the rotor lamination plate 92 and the stator lamination plate 94 prior to stamping operations. When the second 84' and third adhesive application station 100 are utilized in the process as in FIG. 2, the dots 150 applied to the area of the stator lamination plate 94 may be applied at the third station 100 prior to stamping, while the area of the rotor lamination plate 92 may have the dots 150 applied prior to stamping out the rotor lamination plate 92 at the second adhesive application station 84'. Edge isolation due to a lack of adhesive fully between the faces of the laminations may be more of a concern than other methods proposed, but applying dots 150 in any of the adhesive application stations in such a specific location results in reduced concerns of contamination to punch 90 and optimized usage of adhesive material.

It is proposed the adhesive patterns previously described do not need to be utilized uniformly across all adhesive application stations within the process. For instance, the optimized full-face bonding shown in FIG. 5 may be utilized to create the bonding of multilayer material sheet 26, while the optimized dot bonding of FIG. 8 could be utilized to create bonding between the blanked plates of multilayer material sheet 26 when forming rotor and stator lamination assemblies 80 and 82. Other combinations of adhesive patterns may also be utilized.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varies in many ways. Such variations are not to be regarded as a departure from the disclosure, and all such modifications are intended to be included within the scope of the invention as defined in the appended claims.

### Reference signs

- 20: multilayer lamination device
- 22: multilayer forming device
- 24, 24': lamination forming device
- 26: multilayer material sheet
- 28: upper layer processing device
- 30: upper electrical sheet coil material
- 32: decoiler
- 34: coil
- 36: single layer roll feeder
- 38: coil puller
- 40: lower layer processing device
- 42: lower electrical sheet coil material
- 44: butt weld
- 46: straightening machine
- 50: strip loop
- 60: first adhesive application station
- 62, 62A, 62B: adhesive
- 64: upper surface
- 66: applicator
- 68, 68A, 68B: activator
- 70: lower surface
- 72, 72A: applicator
- 74: multilayer roll feeder
- 76: top surface of multilayer material sheet
- 78: bottom surface of multilayer material sheet
- 80: rotor lamination assembly
- 82: stator lamination assembly
- 84, 84': second application station
- 86: stamping tool
- 88: stacker
- 90: punch
- 92: rotor lamination plate
- 94: stator lamination plate
- 96: second adhesive applicator
- 98: second activator applicator
- 100: third application station
- 110: length
- 112, 130: width
- 114: stator outer diameter
- 116: stator inner diameter
- 117: rotor outer diameter
- 118: rotor inner diameter
- 120, 122: scrap portion
- 120a: mechanical interlocking connection
- 122: coil material
- 132: rotor adhesive ring
- 134: stator adhesive ring
- 136: stator slots
- 140, 150: dots
- 142: dot outer diameter
- 154: magnet pockets

## Claims

1. A method of producing a lamination stack assembly for electrical components, the method comprising:
providing an upper electrical sheet coil material (30) and a lower electrical sheet coil material (42);
applying a first adhesive (62) between the upper electrical sheet coil material (30) and the lower electrical sheet coil material (42);
bonding the upper electrical sheet coil material (30) and the lower electrical sheet coil material (42) together and creating a bonded multilayer material sheet (26), wherein the upper electrical sheet coil material (30) and lower electrical sheet coil material (42) are joined together by the adhesive (62);
applying a second adhesive (62A) to the multilayer material sheet (26) for creation of a final lamination stack;
stamping (86) multiple lamination plates from the multilayer material sheet (26) arrangement;
arranging the multiple lamination plates vertically in at least one stack;
wherein the multiple lamination plates include multiple rotor lamination plates (92) and multiple stator lamination plates (94),
pressing the rotor and stator lamination plates (92, 94) together and constructing a final bonded stack of rotor and stator lamination assembly (80, 82), wherein the at least one stack includes a rotor lamination assembly (80) and a stator lamination assembly (82), wherein the stack of rotor and stator lamination assembly (80, 82) is bonded by the second adhesive (62A) disposed between vertically adjacent ones of the rotor and stator lamination plates (92, 94) in the stack,
wherein the stator lamination plates (94) and the rotor lamination plates (92) are stamped from a common length and width of the multilayer material sheet (26), wherein the rotor lamination plate (92) is stamped from material that is disposed radially within the material for the stator lamination plate (94),
wherein the rotor lamination plate (92) is stamped prior to the stator lamination plate (94),
wherein a third adhesive (62B) is applied to the multilayer material sheet (26) after stamping the rotor lamination plate (92) and before stamping the stator lamination plate (94),
wherein the third adhesive (62B) is applied to areas corresponding to the stator lamination plate (94), and the second adhesive (62A) is applied to areas corresponding to the rotor lamination plate (92).

2. The method of claim 1, wherein the first adhesive (62) is applied to an upper surface (64) of the lower electrical sheet coil material (42).

3. The method of claim 1, wherein the upper and lower electrical sheet coil materials (30, 42) are combined and bonded in a multilayer roll feeder (74) after applying the first adhesive (62).

4. The method of claim 3, wherein the multilayer roll feeder (74) includes a single layer roll feeder (36) and a 2-in-1 combiner, wherein the 2-in-1 combiner presses the layers together.

5. The method of claim 1, wherein the second adhesive (62A) is applied prior to stamping each plate of the multiple lamination plates.

6. The method of claim 5, wherein the second adhesive (62A) is applied via an adhesive applicator (66) disposed within a lamination forming device (24, 24').

7. The method of claim 1, wherein the second adhesive (62A) is applied in a common area with the first adhesive (62) for each lamination plate of the multiple lamination plates.

8. The method of claim 1, wherein the first and second adhesive (62, 62A) are applied selectively to areas of the multilayer material sheet (26), such that areas contacting by the stamping press do not include adhesive.

9. The method of claim 1, wherein the first and second adhesive (62, 62A) are in the form of dots (140, 150) disposed within an outline of the lamination plates and outside of areas of stator windings and rotor magnet pockets (154).

10. The method of claim 1, wherein an adhesive activator (68, 68A, 68B) is applied to an area of the upper electrical sheet coil material (30) or the lower electrical sheet coil material (42) or to an area of the multilayer material sheet (26) corresponding to at least the first adhesive (62), wherein the applied adhesive activator (68, 68A, 68B) is configured to contact the corresponding adhesive (62, 62A, 62B) prior to bonding.

11. The method of claim 1, further comprising providing the multilayer material sheet (26) to a lamination forming device (24, 24') including a stamping press, wherein the upper electrical sheet coil material (30) and lower electrical sheet coil material (42) are bonded together immediately prior to the stamping step in an area in line with and adjacent the stamping press.

12. The method of claim 1, wherein the lower electrical sheet coil material (42) is kept in tension between to control the position of the lower electrical sheet coil material (42) and limit relative movement between the upper electrical sheet coil material (30) and the lower electrical sheet coil material (42) as the multilayer material sheet (26) is fed through the stamping press and the first and second adhesive (62, 62A) are applied.

13. The method of claim 2, wherein the second adhesive(62A) is applied to a top surface of the multilayer material sheet (76).

14. The method of claim 1, further comprising applying heat to the lamination stack when constructing the final bonded lamination stack.

15. The method of claim 1, further comprising mechanically interlocking the upper electrical sheet coil material (30) and the lower electrical sheet coil material (42) in the multilayer material stack prior to stamping the lamination plates.

16. A system for performing the method of any of the preceding claims, the system comprising:
a multilayer roll feeder (74) that receives upper and lower layers of sheet material, wherein the multilayer roll feeder (74) feeds and combines the upper and lower electrical sheet coil material (30, 42) into the bonded multilayer material sheet (26) with the first adhesive (62) disposed between the upper and lower electrical sheet coil material (30, 42);
a first adhesive applicator (66; 72) disposed prior to the multilayer roll feeder (74) that applies the first adhesive (62) to one of the upper the lower electrical sheet coil material (30, 42);
at least one stamping punch (90) that performs the stamping of the multiple lamination plates (92, 94), wherein the stamping punch (90) is disposed after the multilayer roll feeder (74);
a second adhesive applicator (96) disposed after the multilayer roll feeder (74) and prior to the at least one stamping punch (90), wherein the second adhesive (62A) applicator (96) applies the second adhesive (62A) to the multilayer material sheet (26);
a third adhesive application station (100) disposed prior to the blanking of the stator lamination plates (94) that applies the third adhesive (62B) to the stator lamination plates areas;
at least one stacker (88) that receives the multiple lamination plates, wherein the at least one stacker (88) bonds the multiple lamination sheets (26) into the final bonded lamination stack.

## Patentansprüche

1. Verfahren zur Herstellung einer Blechpaketanordnung für elektrische Komponenten, wobei das Verfahren umfasst:
Bereitstellen eines oberen Elektroblech-Bandmaterials (30) und eines unteren Elektroblech-Bandmaterials (42);
Aufbringen eines ersten Klebstoffs (62) zwischen das obere Elektroblech-Bandmaterial (30) und das untere Elektroblech-Bandmaterial (42);
Verbinden des oberen Elektroblech-Bandmaterials (30) und des unteren Elektroblech-Bandmaterials (42) miteinander und Erzeugen einer verbundenen mehrschichtigen Materialbahn (26), wobei das obere Elektroblech-Bandmaterial (30) und das untere Elektroblech-Bandmaterial (42) durch den Klebstoff (62) miteinander verbunden werden;
Aufbringen eines zweiten Klebstoffs (62A) auf die mehrschichtige Materialbahn (26) für die Herstellung eines fertigen Blechpakets;
Stanzen (86) mehrerer Lamellenplatten aus der Anordnung der mehrschichtigen Materialbahn (26);
vertikales Anordnen der mehreren Lamellenplatten zu wenigstens einem Stapel;
wobei die mehreren Lamellenplatten mehrere Rotor-Lamellenplatten (92) und mehrere Stator-Lamellenplatten (94) einschließen,
Zusammenpressen der Rotor- und Stator-Lamellenplatten (92, 94) und Aufbauen eines fertigen verbundenen Stapels von Rotor- und Stator-Blechpaketen (80, 82), wobei der wenigstens eine Stapel ein Rotor-Blechpaket (80) und ein Stator-Blechpaket (82) enthält, wobei der Stapel von Rotor- und Stator-Blechpaketen (80, 82) durch den zweiten Klebstoff (62A), der zwischen vertikal benachbarten Rotor- und Stator-Lamellenplatten (92, 94) in dem Stapel angeordnet ist, verbunden wird,
wobei die Stator-Lamellenplatten (94) und die Rotor-Lamellenplatten (92) aus einer gemeinsamen Länge und Breite der mehrschichtigen Materialbahn (26) gestanzt werden, wobei die Rotor-Lamellenplatte (92) aus Material gestanzt wird, das radial innerhalb des Materials für die Stator-Lamellenplatte (94) angeordnet ist,
wobei die Rotor-Lamellenplatte (92) vor der Stator-Lamellenplatte (94) gestanzt wird,
wobei ein dritter Klebstoff (62B) nach Stanzen der Rotor-Lamellenplatte (92) und vor Stanzen der Stator-Lamellenplatte (94) auf die mehrschichtige Materialbahn (26) aufgebracht wird,
wobei der dritte Klebstoff (62B) auf Bereiche aufgebracht wird, die der Stator-Lamellenplatte (94) entsprechen, und der zweite Klebstoff (62A) auf Bereiche aufgebracht wird, die der Rotor-Lamellenplatte (92) entsprechen.

2. Verfahren nach Anspruch 1, wobei der erste Klebstoff (62) auf eine obere Oberfläche (64) des unteren Elektroblech-Bandmaterials (42) aufgebracht wird.

3. Verfahren nach Anspruch 1, wobei das obere und das untere Elektroblech-Bandmaterial (30, 42) nach Aufbringen des ersten Klebstoffs (62) in einem Mehrschicht-Walzeneinzug (74) kombiniert und verbunden werden.

4. Verfahren nach Anspruch 3, wobei der Mehrschicht-Walzeneinzug (74) einen Einschicht-Walzeneinzug (36) und eine 2-zu-1-Doubliermaschine enthält, wobei die 2-zu-1-Doubliermaschine die Schichten zusammenpresst.

5. Verfahren nach Anspruch 1, wobei der zweite Klebstoff (62A) vor Stanzen jeder Platte der mehreren Lamellenplatten aufgebracht wird.

6. Verfahren nach Anspruch 5, wobei der zweite Klebstoff (62A) durch einen Klebstoffapplikator (66) aufgebracht wird, der innerhalb einer Paketbildungsvorrichtung (24, 24') angeordnet ist.

7. Verfahren nach Anspruch 1, wobei der zweite Klebstoff (62A) in einem gemeinsamen Bereich mit dem ersten Klebstoff (62) für jede Lamellenplatte der mehreren Lamellenplatten aufgebracht wird.

8. Verfahren nach Anspruch 1, wobei der erste und der zweite Klebstoff (62, 62A) selektiv auf Bereiche der mehrschichtigen Materialbahn (26) aufgebracht werden, so dass Bereiche, die mit der Stanzpresse in Kontakt kommen, keinen Klebstoff enthalten.

9. Verfahren nach Anspruch 1, wobei der erste und der zweite Klebstoff (62, 62A) in der Form von Punkten (140, 150) vorliegen, die innerhalb eines Umrisses der Lamellenplatten und außerhalb von Bereichen von Statorwicklungen und Rotormagnettaschen (154) angeordnet sind.

10. Verfahren nach Anspruch 1, wobei ein Klebstoffaktivator (68, 68A, 68B) auf einen Bereich des oberen Elektroblech-Bandmaterials (30) oder des unteren Elektroblech-Bandmaterials (42) oder auf einen Bereich der mehrschichtigen Materialbahn (26), der wenigstens dem ersten Klebstoff (62) entspricht, aufgebracht wird, wobei der aufgebrachte Klebstoffaktivator (68, 68A, 68B) zum Kontakt mit dem entsprechenden Klebstoff (62, 62A, 62B) vor Binden gestaltet ist.

11. Verfahren nach Anspruch 1, ferner umfassend Bereitstellen der mehrschichtigen Materialbahn (26) an eine Paketbildungsvorrichtung (24, 24'), die eine Stanzpresse enthält, wobei das obere Elektroblech-Bandmaterial (30) und das untere Elektroblech-Bandmaterial (42) unmittelbar vor dem Stanzschritt in einem Bereich in Linie mit und angrenzend an die Stanzpresse miteinander verbunden werden.

12. Verfahren nach Anspruch 1, wobei das untere Elektroblech-Bandmaterial (42) in Zwischenspannung gehalten wird, um die Position des unteren Elektroblech-Bandmaterials (42) zu steuern und Relativbewegung zwischen dem oberen Elektroblech-Bandmaterial (30) und dem unteren Elektroblech-Bandmaterial (42) zu begrenzen, während die mehrschichtige Materialbahn (26) durch die Stanzpresse geführt wird und der erste und zweite Klebstoff (62, 62A) aufgebracht werden.

13. Verfahren nach Anspruch 2, wobei der zweite Klebstoff (62A) auf eine obere Oberfläche der mehrschichtigen Materialbahn (76) aufgebracht wird.

14. Verfahren nach Anspruch 1, ferner umfassend Anwenden von Wärme auf das Blechpaket während des Aufbauens des fertigen verbundenen Blechpakets.

15. Verfahren nach Anspruch 1, ferner umfassend mechanisches Verriegeln des oberen Elektroblech-Bandmaterials (30) und des unteren Elektroblech-Bandmaterials (42) in dem mehrschichtigen Materialstapel vor Stanzen der Lamellenplatten.

16. System zur Durchführung des Verfahrens nach einem der vorstehenden Ansprüche, wobei das System umfasst:
einen Mehrschicht-Walzeneinzug (74), der obere und untere Schichten von Bahnmaterial aufnimmt, wobei der Mehrschicht-Walzeneinzug (74) das obere und das untere Elektroblech-Bandmaterial (30, 42) zuführt und zu der verbundenen mehrschichtigen Materialbahn (26) kombiniert, wobei der erste Klebstoff (62) zwischen dem oberen und dem unteren Elektroblech-Bandmaterial (30, 42) angeordnet ist;
einen ersten Klebstoffapplikator (66; 72), der vor dem Mehrschicht-Walzeneinzug (74) angeordnet ist und den ersten Klebstoff (62) auf eines von dem oberen und dem unteren Elektroblech-Bandmaterial (30, 42) aufbringt;
wenigstens einen Stanzstempel (90), der das Stanzen der mehreren Lamellenplatten (92, 94) durchführt, wobei der Stanzstempel (90) nach dem Mehrschicht-Walzeneinzug (74) angeordnet ist;
einen zweiten Klebstoffapplikator (96), der nach dem Mehrschicht-Walzeneinzug (74) und vor dem wenigstens einen Stanzstempel (90) angeordnet ist, wobei der zweite Klebstoffapplikator (62A) (96) den zweiten Klebstoff (62A) auf die mehrschichtigen Materialbahn (26) aufbringt;
eine dritte Klebstoffapplikatorstation (100), die vor dem Ausstanzen der Stator-Lamellenplatten (94) angeordnet ist und den dritten Klebstoff (62B) auf die Stator-Lamellenplattenbereiche aufbringt;
wenigstens einen Stapler (88), der die mehreren Lamellenplatten aufnimmt, wobei der wenigstens eine Stapler (88) die mehreren Lamellenbleche (26) zu dem fertigen verbundenen Blechpaket verbindet.

## Revendications

1. Procédé de production d'un ensemble empilement de tôles pour composants électriques, le procédé comprenant :
l'obtention d'un matériau en bobine de tôle magnétique supérieur (30) et d'un matériau en bobine de tôle magnétique inférieur (42) ;
l'application d'un premier adhésif (62) entre le matériau en bobine de tôle magnétique supérieur (30) et le matériau en bobine de tôle magnétique inférieur (42) ;
le collage du matériau en bobine de tôle magnétique supérieur (30) et du matériau en bobine de tôle magnétique inférieur (42) ensemble et la création d'une tôle de matériau multicouche collée (26), le matériau en bobine de tôle magnétique supérieur (30) et le matériau en bobine de tôle magnétique inférieur (42) étant assemblés par l'adhésif (62) ;
l'application d'un deuxième adhésif (62A) à la tôle de matériau multicouche (26) pour la création d'un empilement de tôles final ;
l'estampage (86) de multiples plaques de tôle dans l'agencement de tôle de matériau multicouche (26) ;
l'agencement vertical des multiples plaques de tôle en au moins un empilement,
les multiples plaques de tôle comportant de multiples plaques de tôle de rotor (92) et de multiples plaques de tôle de stator (94) ;
le pressage des plaques de tôle de rotor et de stator (92, 94) ensemble et la construction d'un empilement collé final d'ensembles tôles de rotor et de stator (80, 82), dans lequel l'au moins un empilement comporte un ensemble tôle de rotor (80) et un ensemble tôle de stator (82), dans lequel l'empilement des ensembles tôles de rotor et de stator (80, 82) est collé par le deuxième adhésif (62A) disposé entre celles verticalement adjacentes des plaques de tôle de rotor et de stator (92, 94) dans l'empilement,
dans lequel les plaques de tôle de stator (94) et les plaques de tôle de rotor (92) sont estampées dans une longueur et une largeur communes de la tôle de matériau multicouche (26), dans lequel la plaque de tôle de rotor (92) est estampée dans un matériau qui est disposé radialement à l'intérieur du matériau pour la plaque de tôle de stator (94),
dans lequel la plaque de tôle de rotor (92) est estampée avant la plaque de tôle de stator (94), dans lequel un troisième adhésif (62B) est appliqué à la tôle de matériau multicouche (26) après l'estampage de la plaque de tôle de rotor (92) et avant l'estampage de la plaque de tôle de stator (94),
dans lequel le troisième adhésif (62B) est appliqué à des zones correspondant à la plaque de tôle de stator (94), et le deuxième adhésif (62A) est appliqué à des zones correspondant à la plaque de tôle de rotor (92).

2. Procédé selon la revendication 1, dans lequel le premier adhésif (62) est appliqué à une surface supérieure (64) du matériau en bobine de tôle magnétique inférieur (42).

3. Procédé selon la revendication 1, dans lequel les matériaux en bobine de tôle magnétique supérieur et inférieur (30, 42) sont combinés et collés dans un dispositif d'avance multicouche à rouleaux (74) après l'application du premier adhésif (62).

4. Procédé selon la revendication 3, dans lequel le dispositif d'avance multicouche à rouleaux (74) comporte un dispositif d'avance monocouche à rouleaux (36) et un dispositif de combinaison 2 en 1, le dispositif de combinaison 2 en 1 pressant les couches ensemble.

5. Procédé selon la revendication 1, dans lequel le deuxième adhésif (62A) est appliqué avant l'estampage de chaque plaque parmi les multiples plaques de tôle.

6. Procédé selon la revendication 5, dans lequel le deuxième adhésif (62A) est appliqué par le biais d'un applicateur d'adhésif (66) disposé à l'intérieur d'un dispositif de formation de tôle (24, 24').

7. Procédé selon la revendication 1, dans lequel le deuxième adhésif (62A) est appliqué dans une zone commune avec le premier adhésif (62) pour chaque plaque de tôle parmi les multiples plaques de tôle.

8. Procédé selon la revendication 1, dans lequel le premier et le deuxième adhésif (62, 62A) sont appliqués sélectivement à des zones de la tôle de matériau multicouche (26), de telle sorte que les zones mises en contact par la presse d'estampage ne comportent pas d'adhésif.

9. Procédé selon la revendication 1, dans lequel le premier et le deuxième adhésif (62, 62A) se présentent sous la forme de points (140, 150) disposés à l'intérieur d'un contour des plaques de tôle et à l'extérieur de zones d'enroulements de stator et de poches d'aimant de rotor (154).

10. Procédé selon la revendication 1, dans lequel un activateur d'adhésif (68, 68A, 68B) est appliqué à une zone du matériau en bobine de tôle magnétique supérieur (30) ou du matériau en bobine de tôle magnétique inférieur (42) ou à une zone de la tôle de matériau multicouche (26) correspondant au moins au premier adhésif (62), l'activateur d'adhésif appliqué (68, 68A, 68B) étant conçu pour entrer en contact avec l'adhésif correspondant (62, 62A, 62B) avant le collage.

11. Procédé selon la revendication 1, comprenant en outre la fourniture de la tôle de matériau multicouche (26) à un dispositif de formation de tôle (24, 24') comportant une presse d'estampage, dans lequel le matériau en bobine de tôle magnétique supérieur (30) et le matériau en bobine de tôle magnétique inférieur (42) sont collés ensemble juste avant l'étape d'estampage dans une zone alignée sur et adjacente à la presse d'estampage.

12. Procédé selon la revendication 1, dans lequel le matériau en bobine de tôle magnétique inférieur (42) est maintenu en tension pour contrôler la position du matériau en bobine de tôle magnétique inférieur (42) et limiter le mouvement relatif entre le matériau en bobine de tôle magnétique supérieur (30) et le matériau en bobine de tôle magnétique inférieur (42) lorsque la tôle de matériau multicouche (26) est avancée à travers la presse d'estampage et le premier et le deuxième adhésif (62, 62A) sont appliqués.

13. Procédé selon la revendication 2, dans lequel le deuxième adhésif (62A) est appliqué à une surface supérieure de la tôle de matériau multicouche (76).

14. Procédé selon la revendication 1, comprenant en outre l'application de chaleur à l'empilement de tôles lors de la construction de l'empilement de tôles collé final.

15. Procédé selon la revendication 1, comprenant en outre le verrouillage mécanique du matériau en bobine de tôle magnétique supérieur (30) et du matériau en bobine de tôle magnétique inférieur (42) dans l'empilement de matériau multicouche avant l'estampage des plaques de tôle.

16. Système destiné à effectuer le procédé de l'une quelconque des revendications précédentes, le système comprenant :
un dispositif d'avance multicouche à rouleaux (74) qui reçoit des couches supérieure et inférieure de matériau en tôle, le dispositif d'avance multicouche à rouleaux (74) faisant avancer et combinant les matériaux en bobine de tôle magnétique supérieur et inférieur (30, 42) pour produire la tôle de matériau multicouche collée (26) avec le premier adhésif (62) disposé entre les matériaux en bobine de tôle magnétique supérieur et inférieur (30, 42) ;
un premier applicateur d'adhésif (66 ; 72) disposé avant le dispositif d'avance multicouche à rouleaux (74) qui applique le premier adhésif (62) à un des matériaux en bobine de tôle magnétique supérieur et inférieur (30, 42) ;
au moins un poinçon d'estampage (90) qui effectue l'estampage des multiples plaques de tôle (92, 94), le poinçon d'estampage (90) étant disposé après le dispositif d'avance multicouche à rouleaux (74) ;
un deuxième applicateur d'adhésif (96) disposé après le dispositif d'avance multicouche à rouleaux (74) et avant l'au moins un poinçon d'estampage (90), le deuxième applicateur (96) d'adhésif (62A) appliquant le deuxième adhésif (62A) à la tôle de matériau multicouche (26) ;
un troisième poste d'application d'adhésif (100) disposé avant le découpage des plaques de tôle de stator (94) qui applique le troisième adhésif (62B) à des zones des plaques de tôle de stator ;
au moins un dispositif d'empilement (88) qui reçoit les multiples plaques de tôle, l'au moins un dispositif d'empilement (88) collant les multiples tôles de tôle (26) pour produire l'empilement de tôles collé final.
